# EUROPÄISCHE PATENTSCHRIFT

(11) **EP 0 785 155 B1**
(45) Veröffentlichungstag und Bekanntmachung des Hinweises auf die Patenterteilung: **16.04.2003**
(21) Anmeldenummer: 97100581.4
(22) Anmeldetag: 16.01.1997
(51) Int. Cl.: B65G 43/02

(54) **Fördergurt mit eingebetteten Leiterschleifen**
Conveyor belt with embedded conductor loops
Bande transporteuse à boucles conductrices encastrées

(30) Priorität: 19.01.1996 DE 19601899
(43) Veröffentlichungstag der Anmeldung: 23.07.1997
(73) Patentinhaber: ContiTech Transportbandsysteme GmbH, 30165 Hannover (DE)
(72) Erfinder: Alles, Rainer, Dr.-Ing., 30916 Isernhagen (DE); Schulze, Siegfried, 47495 Rheinberg (DE); Scheuermann, Frank, 45739 Oer-Erkenschwick (DE)

(56) Entgegenhaltungen:
- EP-A- 0 323 011
- DE-A- 1 919 327
- DE-A- 3 347 570
- DE-C- 4 444 262
- US-A- 4 621 727
- US-A- 4 890 111

## Beschreibung

Die Erfindung betrifft einen vorwiegend aus Gummi bestehenden Gurt, Riemen, Fördergurt etc. mit darin eingebetteten endlosen Schleifen aus leitfähigem Material. Die Erfindung betrifft ferner ein Verfahren zur Herstellung solcher Gurte; Riemen, Fördergurte etc.

Es ist seit langem bekannt, in Gurte, Riemen etc. endlose Leiterschleifen zu unterschiedlichen Überwachungszwecken einzubetten. Derartige Leiterschleifen werden insbesondere in endlose Fördergurte eingebettet und der auf induktivem Wege in den Leiterschleifen erzeugte Stromfluß wird dazu verwendet, den bewegten Fördergurt ständig zu überwachen und durch etwa eindringende Fremdkörper verursachte Schäden, insbesondere Längsrisse, frühzeitig festzustellen. In jüngster Vergangenheit wurde auch schon vorgeschlagen, jeder Leiterschleife im Fördergurt einen Transponder, bestehend aus einem integrierten Schaltkreis, der leitend mit einer Spule verbunden ist, zuzuordnen. In diesem Fall werden die Leiterschleifen von einer außerhalb des Fördergurts befindlichen Einrichtung auf induktivem Wege mit Energie versorgt, die sie ihrerseits wiederum auf induktivem Wege in die ihnen zugeordneten Transponder einkoppeln. Die Transponder übermitteln auf umgekehrtem Wege eine in ihrem Schaltkreis gespeicherte individuelle Kennung an die Einrichtung.

Die externe Einrichtung schließt aus dem Empfang des Signals auf die Unversehrtheit der Leiterschleife bzw. des Transponders und damit auf die Unversehrtheit des Fördergurtes im Bereich der Leiterschleife. Umgekehrt wird aus einer Nichtübermittlung der individuellen Kennung auf eine Beschädigung der Leiterschleife und damit auf eine Beschädigung des Fördergurtes im Bereich der Leiterschleife geschlossen (siehe auch Patentanmeldung DE 44 44 262 C, wo ein derartiges Überwachungssystem ausführlich beschrieben ist).

Die obigen Ausführungen zeigen, daß eine zuverlässige Überwachung mit Hilfe der Leiterschleifen nur dann möglich ist, wenn ein Ausfall einer Leiterschleife ausschließlich auf eine Schädigung des Gurtes, Riemen etc. zurückzuführen ist. Der Haltbarkeit der Leiterschleifen gegenüber den alltäglichen Belastungen kommt also eine besondere Bedeutung zu. Darüber hinaus sollen Leiterschleifen zu Überwachungszwecken auch in besonders dünnen Fördergurten aus elastomerem Werkstoff, z.B. in Fördergurte, die als Festigkeitsträger Textileinlagen aufweisen und nur von einer sehr dünnen elastomeren Deckschicht abgedeckt sind, eingebettet werden. Es ist offensichtlich, daß die Anforderung an die Leiterschleife, nämlich die hohe Haltbarkeit und die Möglichkeit der Einbettung in extrem dünne Deckschichten, entgegengesetzt sind. Bisher konnten noch keine Leiterschleifen geschaffen werden, die den entgegengesetzten Anforderungen zufriedenstellend Genüge tun.

Der Erfindung liegt die Aufgabe zugrunde, einen Gurt, Riemen, Fördergurt etc. zu schaffen, der einerseits über eine dünne Deckschicht verfügen und der andererseits durch eingebettete Leiterschleifen zuverlässig überwacht werden kann. Der Erfindung liegt ferner die Aufgabe zugrunde, ein Verfahren zur Herstellung eines solchen Gurtes, Riemen, Fördergurtes etc. zu schaffen.

Gemäß den kennzeichnenden Merkmalen des Anspruchs 1 und des nebengeordneten Anspruchs 11 wird die Aufgabe dadurch gelöst, daß die Schleife aus einer elektrisch leitfähigen Folie gefertigt ist.

Der Grundgedanke der Erfindung ist darin zu sehen, daß die Leiterschleifen aus einer elektrisch leitfähigen Folie gefertigt werden. Einerseits können die Leiterschleifen somit extrem dünn gefertigt werden und andererseits weisen sie aufgrund ihrer Flexibilität eine hohe mechanische Belastbarkeit gegenüber Biegungen auf und sind somit lange haltbar.

Die mit der Erfindung erzielten Vorteile sind insbesondere darin zu sehen, daß die Leiterschleifen nunmehr auch in Gurte, Riemen, Fördergurte etc. mit extrem dünnen Deckschichten eingebettet werden können, in denen die Verwendung von Leiterschleifen aufgrund ihrer zu großen Dicke bisher nicht möglich war. Wegen der hohen Flexibilität der Leiterschleifen arbeiten sie sich bei der Biegebelastung der Gurte, Riemen, Fördergurte etc. nicht aus den Deckschichten heraus. Trotz der genannten Vorteile ist die Leiterschleife einfach und damit kostengünstig zu fertigen. Darüber hinaus hat es sich herausgestellt, daß bei der Verwendung von Metallfolie aufgrund ihrer guten elektrischen Eigenschaften die Reichweite der erfindungsgemäßen Leiterschleifen gegenüber herkömmlichen Leiterschleifen deutlich erhöht ist.

Gemäß einer Weiterbildung der Erfindung wird die Leiterschleife endlos aus der leitenden Folie gefertigt, so daß eine Verbindungserstellung der Schleifenenden nicht notwendig ist. Derartige Leiterschleifen weisen also keinen Verbindungsbereich auf, der sich bei herkömmlichen Leiterschleifen häufig als besonderer Schwachpunkt erweist. Die Haltbarkeit der Leiterschleifen kann durch die endlose Fertigung also nochmals deutlich erhöht werden.

Gemäß einer Weiterbildung der Erfindung wird die elektrische Leiterschleife aus einer elektrisch leitfähigen Folie gefertigt, die eine Dicke zwischen 20 µm und 200 µm aufweist. Die elektrische Leiterschleife kann somit in Gurte, Riemen etc. mit einer extrem geringen Bauhöhe eingesetzt werden. Besonders dünne Leiterschleifen lassen sich aus handelsüblichen Aluminiumfolien fertigen, die eine Dicke von ca. 20 µm bis ca. 30 µm aufweisen. Alternativ können die Leiterschleifen auch aus einer Kupferfolie gefertigt werden, deren Dicke zwischen 100 µm und 200 µm liegt. Schließlich ist es auch möglich, Folien aus einer Stahllegierung oder Federstahl zu verwenden. Es ist ebenfalls möglich, die Leiterschleifen aus einer metallisch beschichteten Kunststoffolie zu fertigen. Die metallische Beschichtung kann beispielsweise auf die Kunstofffolie aufgedruckt oder aufgedampft werden.

Gemäß einer Weiterbildung der Erfindung nach Anspruch 7 sind die Leiterschleifen mit Perforationslöchern versehen. Beim Einbau perforierter Leiterschleifen dringt Gummimaterial des Gurtes, Riemens etc. durch diese Perforationslöcher hindurch und "verankert" die Leiterschleifen in dem Gurt, Riemen etc.

Gemäß einer Weiterbildung der Erfindung nach Anspruch 8 sind die Leiterschleifen mit einer Wendelung versehen und können somit Längenveränderungen des Gurtes, Riemens etc., aufnehmen, ohne zerstört zu werden. Erst bei Überschreiten von kritischen Längenveränderungen zerreißen die Leiterschleifen, so daß das Überschreiten der kritischen Längenveränderung zuerlässig durch die Leiterschleifen angezeigt wird.

Gemäß einer Weiterbildung der Erfindung nach Anspruch 9 steht jede in den Gurt, Riemen etc. eingebettete Leiterschleife mit einem ihr zugeordneten Transponder in Wirkverbindung, so daß ein Überwachungssystem, sowie es in der deutschen Patentanmeldung mit dem Aktenzeichen P 44 44 262.9 ausführlich beschrieben worden ist, betreibbar ist.

Gemäß einer Weiterbildung der Erfindung nach Anspruch 10 ist der einer Leiterschleife zugeordnete Transponder an die Leiterschleife befestigt, so daß zwischen der Leiterschleife und dem Transponder eine feste Verbindung besteht.

Gemäß einer Weiterbildung des nebengeordneten Verfahrensanspruchs 11 wird die Leiterschleife aus eine elektrisch leitfähigen Folie ausgestanzt. Dieses Herstellungsverfahren bietet den Vorteil, daß es besonders einfach und schnell durchzuführen und damit kostengeünstig ist.

Alternativ ist es auch möglich, die Leiterschleife mit einem Laser aus eine elektrisch leitfähigen Folie auszuschneiden. Dieses Herstellungsverfahren bietet den Vorteil, daß Laserschneidanlagen üblicherweise programmgesteuert sind. Somit können mit Hilfe einer Laserschneidanlage Leiterschleifen unterschiedlicher Form und Größe gefertigt werden, dazu ist lediglich eine Änderung des Steuerprogramms der Laseranlage notwendig.

Ein Ausführungsbeispiel und weitere Vorteile der Erfindung werden im Zusammenhang mit den nachstehenden Figuren erläutert. Darin zeigt
Figur 1a einen aufgebrochen Gurt, Riemen etc. in Aufsicht,
Figur 1b einen Querschnitt entlang der Linie AA
Figur 2 einen aufgebrochen Gurt, Riemen etc. in Aufsicht,
Figur 3a einen aufgebrochen Gurt, Riemen etc. in Aufsicht,
Figur 3b einen Querschnitt entlang der Linie AA.

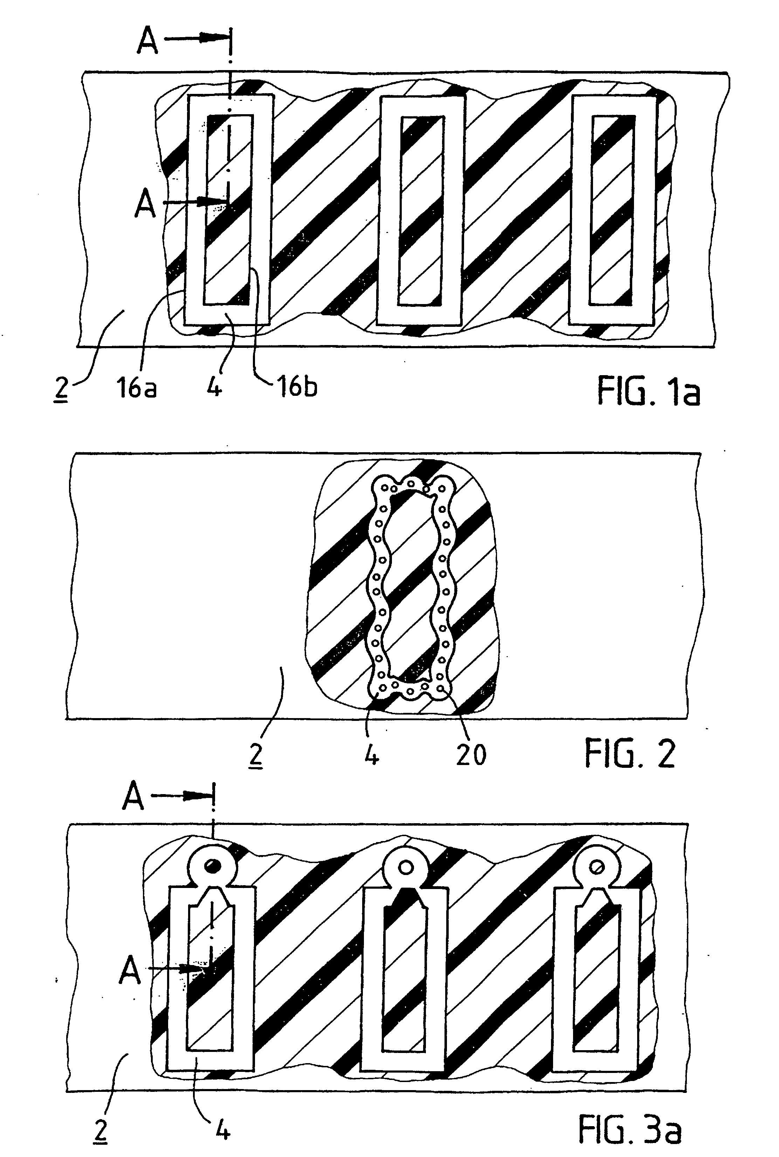

Die Figuren 1 bis 3 zeigen jeweils einen aufgebrochenen Gurt, Riemen, Fördergurt etc. Der Aufbau entsprechender Gurte, Riemen, Fördergurte etc. ist dem Fachmann geläufig und darüber hinaus für das Verständnis der Erfindung ohne Belang, so daß auf den Aufbau der Gurt, Riemen etc. nicht näher eingegangen werden soll.

Figur 1 zeigt einen aufgebrochen Gurt, Riemen, Fördergurt 2 mit Leiterschleifen 4, die zu Überwachungszwecken in regelmäßigen Abständen in den Gurt, Riemen, Fördergurt 2 eingebettet sind. Die Leiterschleifen 4 sind aus einer elektrisch leitfähigen Folie endlos gefertigt und weisen somit keine Verbindungsstelle auf. Die Leiterschleifen 4 können beispielsweise mittels eines Stanzwerkzeuges aus einer elektrisch leitfähigen Folie ausgestanzt werden, wozu ein Stanzwerkzeug bereitszustellen ist, dessen Schneiden den Umrandungslinien 16a bzw. 16b entsprechen. Es ist ebenfalls möglich, die Leiterschleifen 4 mit Hilfe eines Lasers, der an den Umrandungslinien 16a bzw. 16b entlangfährt, herauszuschneiden.

Figur 1b zeigt einen Querschnitt entlang der in der Figur 1a eingezeichneten Linie AA. In der Figur 1b ist ein Fördergurt 2 dargestellt, der über Festigkeitsträger 14 in Form von z.B. Textileinlagen verfügt. Die Leiterschleife 4 ist zwischen dem oberen Festigkeitsträger 14 und der Oberfläche 18 des Fördergurtes 2 eingebettet. Bei bestimmten Arten von Fördergurten 2 ist die zur Verfügung stehende Bauhöhe sehr gering, so daß bei derartigen Fördergurten 2 die erfindungsgemäß gefertigten Leiterschleifen 4 besonders vorteilhaft eingesetzt werden können. So ist es möglich, Leiterschleifen 4 aus elektrisch leitfähigen Folien zu fertigen, die eine Dicke d zwischen 20 µm und 200 µm aufweist. Bei der Verwendung von handelsüblichen Aluminiumfolien ist es beispielsweise möglich, Leiterschleifen 4 zu fertigen, die eine Dicke aufweisen, die zwischen 20 µm und 30 µm liegt. Alternativ können die Leiterschleifen 4 auch aus elektrisch leitfähigen Folien aus Kupfer gefertigt werden, deren Dicke zwischen 100 µm und 200 µm liegt. Schließlich ist es möglich, die Leiterschleife aus einer elektrisch leitfähigen Folie aus einer Stahllegierung bzw. aus Federstahl zu fertigen.

Figur 2 zeigt in Aufsicht einen aufgebrochen Gurt, Riemen, Fördergurt 2 mit eingebetteten Leiterschleifen 4. Die Leiterschleifen 4 weisen Wendelungen auf und können dadurch Zugverformungen, die in dem Gurt, Riemen, Fördergurt 2 durch Zugbelastungen entstehen, bis zu einem gewissen Grade aufnehmen ohne zerstört zu werden. Darüber hinaus können die Leiterschleifen 4 Perforationslöcher 20 aufweisen, durch die bei ihrer Einbettung in den Gurt, Riemen, Fördergurt 2 Gummimaterial durchdringt, so daß die Leiterschleifen 4 in dem Gurt, Riemen, Fördergurt 2 "verankert" sind. Durch die Perforationslöcher 20 kann also eine bessere Haftung der Leiterschleifen 4 in dem Gurt, Riemen, Fördergurt 2 erreicht werden.

Figur 3a zeigt in Aufsicht einen aufgebrochenen Gurt, Riemen, Fördergurt 2 mit eingebetteten Leiterschleifen 4. Die Leiterschleifen 4 weisen, um mit zusätzlich in den Gurt, Riemen, Fördergurt 2 eingebetteten Transpondern 12 gut kommunizieren zu können, Ausbuchtungen 22 auf. Die gezeigten Leiterschleifen 4 können genau so gefertigt werden, wie es bereits in dem Zusammenhang mit der Figur 1a erläutert worden ist. Ein Überwachungssystem, bei dem der Gurt, Riemen, Fördergurt 2 neben den eingebetteten Leiterschleifen 4 zusätzlich über eingebettete Transponder 12 verfügt, ist ausführlich in der deutschen Patentanmeldung mit dem Aktenzeichen P 44 44 262.9 erläutert, so daß hier auf nähere Erläuterungen verzichtet werden soll.

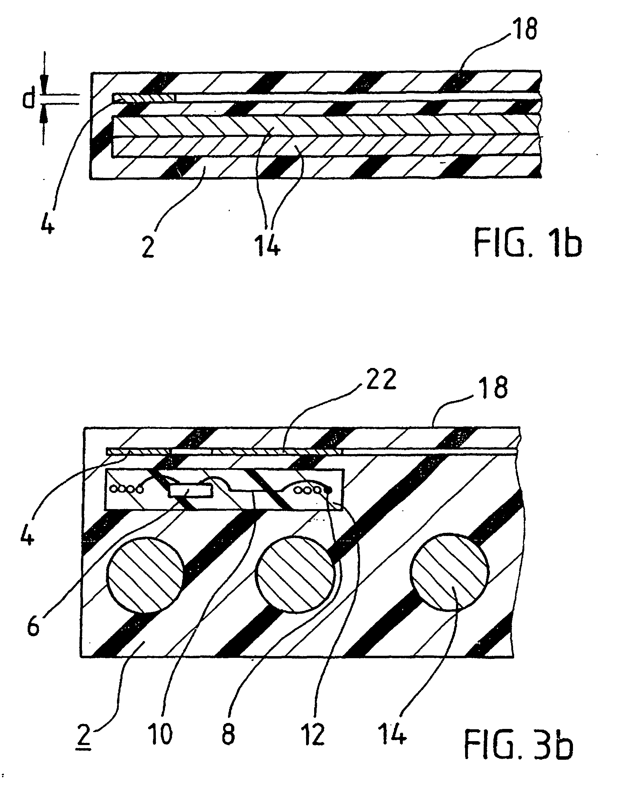

Figur 3b zeigt einen Querschnitt entlang der in der Figur 3a gezeigten Linie AA. Der in der Figur 3b gezeigte Gurt, Riemen, Fördergurt 2 verfügt beispielhaft über Festigkeitsträger 14 in Form von Stahlseilen. Zwischen den Festigkeitsträgern 14 und der Oberfläche 18 des Gurts, Riemens, Fördergurts 2 ist die Leiterschleife 4 eingebettet. Unterhalb oder oberhalb der Ausbuchtung 22 der Leiterschleife 4 ist der Transponder 12, bestehend aus einem integrierten Schaltkreis 6, einer Spule 8 und leitenden Verbindungen 10 von der Spule 8 zu dem integrierten Schaltkreis 6, derartig angeordnet, daß eine besonders gute Kommunikation zwischen dem Transponder 12 und der Leiterschleife 4 möglich ist. Für genauere Erläuterungen sei auch in diesem Zusammenhang auf die Anmeldung P 44 44 262.9 verwiesen. Der Transponder 12 kann entweder als separates Bauteil in den Gurt, Riemen, Fördergurt 2 eingebettet sein, es ist aber auch möglich, den Transponder mit der Leiterschleife 4 zu verbinden. Dies kann beispielsweise dadurch geschehen, daß der Transponder 12 an der Ausbuchtung 22 angeklebt oder vernietet etc. wird.

Es sei ausdrücklich darauf hingewiesen, daß die in den Figuren 1 - 3 erläuterten Ausführungsbeipiele der Erfindung auch miteinander kombiniert werden können. So ist es beispielsweise möglich, die in der Figur 1a bzw. der Figur 3a gezeigten Leiterschleifen zur "Verankerung" in dem Gurt, Riemen, Fördergurt 2 etc. mit Perforationslöchern 20 zu versehen.

### Bezugszeichenliste

- 2: Gurt, Riemen, Fördergurt etc.
- 4: Leiterschleife
- 6: integrierter Schaltkreis
- 8: Spule
- 10: leitende Verbindungen von der Spule zum integrierten Schaltkreis
- 12: Transponder
- 14: Festigkeitsträger
- 16a,b: Umrandungslinien
- 18: Oberfläche
- 20: Perforationslöcher
- 22: Ausbuchtungen

## Patentansprüche

1. Gurt, Riemen, Fördergurt (2) etc., der vorwiegend aus Gummi besteht, mit darin eingebetteten endlosen Schleifen (4) aus leitfähigem Material, **dadurch gekennzeichnet, daß** die Schleife (4) aus einer elektrisch leitfähigen Folie gefertigt ist.

2. Gurt, Riemen, Fördergurt (2) etc. nach Anspruch 1, **dadurch gekennzeichnet, daß** die Schleife (4) endlos aus der leitenden Folie gefertigt ist.

3. Gurt, Riemen, Fördergurt (2) etc. nach einem der Ansprüche 1 bis 2, **dadurch gekennzeichnet, daß** die elektrisch leitfähige Folie eine Dicke d aufweist, die zwischen 20 µm und 200 µm liegt.

4. Gurt, Riemen, Fördergurt (2) etc. nach Anspruch 3, **dadurch gekennzeichnet, daß** die elektrisch leitfähige Folie eine Aluminiumfole mit einer Dicke d ist, die zwischen 20 µm und 30 µm liegt.

5. Gurt, Riemen, Fördergurt (2) etc. nach Anspruch 3, **dadurch gekennzeichnet, daß** die elektrisch leitfähige Folie eine Kupferfolie mit einer Dicke d ist, die zwischen 100 µm und 200 µm liegt.

6. Gurt, Riemen, Fördergurt (2) etc. nach Anspruch 3, **dadurch gekennzeichnet, daß** die elektrische leitfähige Folie eine Folie eine Folie aus einer Stahllegierung oder Federstahl ist.

7. Gurt, Riemen, Fördergurt (2) etc. nach einem der Ansprüche 1 bis 6, **dadurch gekennzeichnet, daß** die Schleife Perforationslöcher (20) aufweist.

8. Gurt, Riemen, Fördergurt (2) etc. nach einem der Ansprüche 1 bis 7, **dadurch gekennzeichnet, daß** die Schleife (4) eine Wendelung aufweist.

9. Gurt, Riemen, Fördergurt (2) etc. nach einem der Ansprüche 1 bis 8, **dadurch gekennzeichnet, daß** die Schleife mit einem Transponder (12) in Wirkverbindung steht.

10. Gurt, Riemen, Fördergurt (2) etc. nach Anspruch 9, **dadurch gekennzeichnet, daß** der Transponder (12) an der Schleife (4) befestigt ist.

11. Verfahren zur Herstellung eines Gurtes, Riemen, Fördergurtes (2) etc. mit darin eingebetteten endlosen Schleifen (4) aus leitfähigem Material, **dadurch gekennzeichnet, daß** die Schleife (4) aus einer elektrisch leitfähigen Folie gefertigt und in den Fördergurt eingebettet wird.

12. Verfahren zur Herstellung eines Gurtes, Riemen, Fördergurtes (2) etc. nach Anspruch 11, **dadurch gekennzeichnet, daß** die Schleife (4) endlos aus der leitenden Folie gefertigt wird.

13. Verfahren zur Herstellung einer endlosen Schleife (4) nach einem der Ansprüche 11 bis 12, **dadurch gekennzeichnet, daß** die Schleife (4) aus einer elektrisch leitfähigen Folie ausgestanzt wird.

14. Verfahren zur Herstellung einer endlosen Schleife (4) nach einem der Ansprüche 11 bis 12, **dadurch gekennzeichnet, daß** die Schleife (4) mit einem Laser aus einer elektrisch leitfähigen Folie ausgeschnitten wird.

## Claims

1. Belt, pulley, conveyor belt (2), etc., which is predominantly formed from rubber, with endless loops (4) embedded therein and formed from conductive material, **characterised in that** the loop (4) is produced from an electrically conductive foil.

2. Belt, pulley, conveyor belt (2), etc. according to claim 1, **characterised in that** the loop (4) is endlessly produced from the conductive foil.

3. Belt, pulley, conveyor belt (2), etc. according to one of claims 1 to 2, **characterised in that** the electrically conductive foil has a thickness d, which lies between 20 µm and 200 µm.

4. Belt, pulley, conveyor belt (2), etc. according to claim 3, **characterised in that** the electrically conductive foil is an aluminium foil having a thickness d which lies between 20 µm and 30 µm.

5. Belt, pulley, conveyor belt (2), etc. according to claim 3, **characterised in that** the electrically conductive foil is a copper foil having a thickness d, which lies between 100 µm and 200 µm.

6. Belt, pulley, conveyor belt (2), etc. according to claim 3, **characterised in that** the electrically conductive foil is a foil formed from a steel alloy or spring steel.

7. Belt, pulley, conveyor belt (2), etc. according to one of claims 1 to 6, **characterised in that** the loop has perforation holes (20).

8. Belt, pulley, conveyor belt (2), etc. according to one of claims 1 to 7, **characterised in that** the loop (4) has a spiral configuration.

9. Belt, pulley, conveyor belt (2), etc. according to one of claims 1 to 8, **characterised in that** the loop is in operative connection with a transponder (12).

10. Belt, pulley, conveyor belt (2), etc. according to claim 9, **characterised in that** the transponder (12) is mounted on the loop (4).

11. Method of producing a belt, pulley, conveyor belt (2), etc. with endless loops (4) embedded therein and formed from conductive material, **characterised in that** the loop (4) is produced from an electrically conductive foil and is embedded in the conveyor belt.

12. Method of producing a belt, pulley, conveyor belt (2), etc. according to claim 11, **characterised in that** the loop (4) is endlessly produced from the conductive foil.

13. Method of producing an endless loop (4) according to one of claims 11 to 12, **characterised in that** the loop (4) is stamped from an electrically conductive foil.

14. Method of producing an endless loop (4) according to one of claims 11 to 12, **characterised in that** the loop (4) is cut from an electrically conductive foil with a laser.

## Revendications

1. Bande, courroie, bande de convoyeur (2), etc. qui est essentiellement en caoutchouc, comprenant des boucles sans fin (4) noyées dedans et constituées d'un matériau conducteur, **caractérisée en ce que** la boucle (4) est fabriquée dans une feuille électriquement conductrice.

2. Bande, courroie, bande de convoyeur (2), etc. selon la revendication 1, **caractérisée en ce que** la boucle (4) est fabriquée, sans fin, à partir de la feuille conductrice.

3. Bande, courroie, bande de convoyeur (2), etc. selon la revendication 1 ou 2, **caractérisée en ce que** la feuille électriquement conductrice a une épaisseur d qui est comprise entre 20 µm et 200 µm.

4. Bande, courroie, bande de convoyeur (2), etc. selon la revendication 3, **caractérisée en ce que** la feuille électriquement conductrice est une feuille d'aluminium ayant une épaisseur d qui est comprise entre 20 µm et 30 µm.

5. Bande, courroie, bande de convoyeur (2), etc. selon la revendication 3, **caractérisée en ce que** la feuille électriquement conductrice est une feuille de cuivre ayant une épaisseur d qui est comprise entre 100 µm et 200 µm.

6. Bande, courroie, bande de convoyeur (2), etc. selon la revendication 3, **caractérisée en ce que** la feuille électriquement conductrice est une feuille d'un alliage d'acier ou d'un acier à ressorts.

7. Bande, courroie, bande de convoyeur (2), etc. selon l'une quelconque des revendications 1 à 6, **caractérisée en ce que** la boucle présente des trous de perforation (20).

8. Bande, courroie, bande de convoyeur (2), etc. selon l'une quelconque des revendications 1 à 7, **caractérisée en ce que** la boucle (4) présente une spirale.

9. Bande, courroie, bande de convoyeur (2), etc. selon l'une quelconque des revendications 1 à 8, **caractérisée en ce que** la boucle est en connexion active avec un transpondeur (12).

10. Bande, courroie, bande de convoyeur (2), etc. selon la revendication 9, **caractérisée en ce que** le transpondeur (12) est fixé sur la boucle (4).

11. Procédé de fabrication d'une bande, d'une courroie, d'une bande de convoyeur (2), etc. comprenant des boucles sans fin (4) noyées dedans et constituées d'un matériau conducteur, **caractérisé en ce que** la boucle (4) est fabriquée dans une feuille électriquement conductrice et noyée dans la bande du convoyeur.

12. Procédé de fabrication d'une bande, d'une courroie, d'une bande de convoyeur (2), etc. selon la revendication 11, **caractérisé en ce que** la boucle (4) est fabriquée, sans fin, à partir de la feuille conductrice.

13. Procédé de fabrication d'une boucle sans fin (4) selon la revendication 11 ou 12, **caractérisé en ce que** la boucle (4) est découpée à la matrice à partir d'une feuille électriquement conductrice.

14. Procédé de fabrication d'une boucle sans fin (4) selon la revendication 11 ou 12, **caractérisé en ce que** la boucle (4) est découpée au laser à partir d'une feuille électriquement conductrice.
